Europäisches Patentamt

European Patent Office

Office européen des brevets

(19)

(11) Veröffentlichungsnummer: **0 157 192 B1**

# EUROPÄISCHE PATENTSCHRIFT

(12)

(45) Veröffentlichungstag der Patentschrift: **11.11.92**

(51) Int. Cl.⁵: **B60L 5/16**, B60L 5/36

(21) Anmeldenummer: **85102405.9**

(22) Anmeldetag: **04.03.85**

(54) **Verfahren und Vorrichtung zum Anschliessen des Stromabnehmers eines Trolleyfahrzeugs an ein Stromschienensystem.**

(30) Priorität: **08.03.84 SE 8401294**

(43) Veröffentlichungstag der Anmeldung:
**09.10.85 Patentblatt 85/41**

(45) Bekanntmachung des Hinweises auf die
Patenterteilung:
**11.11.92 Patentblatt 92/46**

(84) Benannte Vertragsstaaten:
**AT CH DE FR GB IT LI**

(56) Entgegenhaltungen:
**EP-A- 0 046 562**
**FR-A- 2 530 555**

**"World Mining" Jan. 83 Seiten 58-59**

(73) Patentinhaber: **ASEA AB**

**S-721 83 Västeras(SE)**

(72) Erfinder: **Ling, Bernt, Dipl.-Ing.**
**Eldhusgatan 4**
**S-724 81 Västeras(SE)**

(74) Vertreter: **Boecker, Joachim, Dr.-Ing.**
**Rathenauplatz 2-8**
**W-6000 Frankfurt a.M. 1(DE)**

**Beschreibung**

Die vorliegende Erfindung betrifft ein Verfahren und eine Vorrichtung zum Anschließen des Stromabnehmers eines Trolleyfahrzeugs an ein Stromschienensystem gemäß dem Oberbegriff des Anspruches 1.

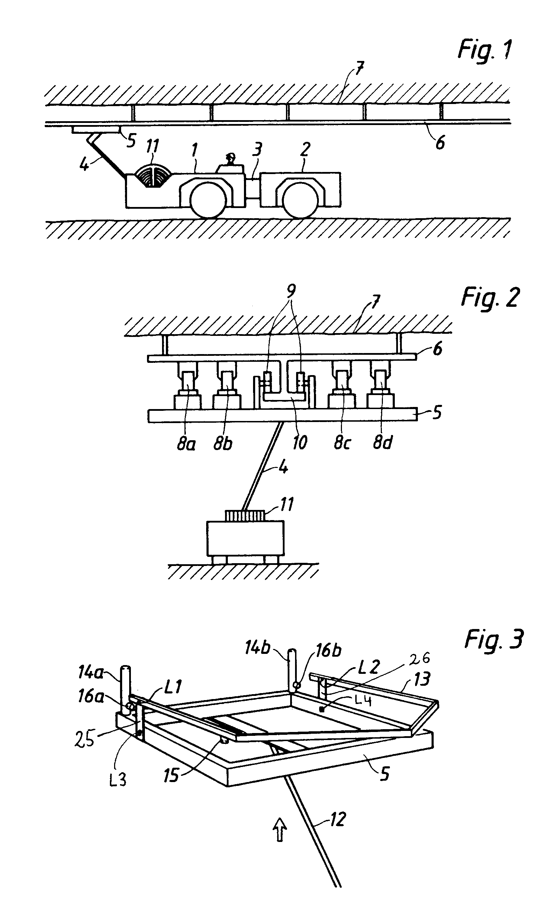

Beim Transport von Erz oder ähnlichen Gütern in Grubengängen ist man bestrebt, sogenannte Trolleyfahrzeuge, also Fahrzeuge mit elektrischem Antrieb, zu verwenden. Mechanisch können diese Fahrzeuge so konstruiert sein, daß sie aus einem Zugteil 1 und einem Lastteil 2 bestehen (siehe Figur 1), die durch einen Arm 3 miteinander verbunden sind, der in senkrechter Richtung steif, in seitlicher Richtung jedoch drehbar ist. Ein leeres Fahrzeug kann etwa 30 Tonnen wiegen, und die Last kann bis zu 50 Tonnen betragen. Zugteil und Lastteil haben in der Regel je zwei Räder. Der Antrieb des Fahrzeugs kann durch zwei Elektromotoren erfolgen, von denen einer im Zugteil und einer im Lastteil untergebracht ist. Die Stromversorgung erfolgt im allgemeinen über ein Kabel 4 ein Stromabnehmergestell 5 und einem auf diesem montierten Stromabnehmer. Über das Stromabnehmergestell und den Stromabnehmer wird ein elektrischer Kontakt mit einem Stromschienen enthaltenden Schienenstrang 6 hergestellt, der über Isolatoren oder auf andere Weise an der Decke 7 des Grubenganges befestigt ist. Ein Trolleyfahrzeugsystem dieser Art ist aus der Druckschrift "World Mining" 1983 (Seiten 58 und 59) bekannt.

Das Ankoppeln beziehungsweise Abkoppeln elektrischer Trolleyfahrzeuge über Stromabnehmer an einen über dem Fahrzeug verlaufenden Schienenstrang ist bei den bekannten Anlagen nicht in einfacher Weise möglich. Das Ankoppeln bzw. Abkoppeln erfolgt bei stehendem Fahrzeug in besonderen Schaltstationen oder dergleichen oder auf andere Weise, wodurch eine erhebliche mechanische Montagearbeit erforderlich wird. Figur 2 zeigt ein Beispiel für eine bekannte Anordnung eines Stromabnehmergestells. Es sind vier Stromabnehmer vorhanden, wobei die Stromabnehmer 8a, 8b und 8c das Fahrzeug mit Dreiphasenstrom versorgen, während der Stromabnehmer 8d eine Erdverbindung herstellt. Das Stromabnehmergestell 5 hängt mittels Rollen 9 an einer Führungsschiene 10, die einen T-förmigen Querschnitt hat. Die Stromübertragung vom Stromabnehmergestell und den Stromabnehmern zu dem Trolleyfahrzeug erfolgt über ein mechanisch verstärktes Kabel 4, welches zugleich das Stromabnehmergestell zieht. Das Kabel ist vorzugsweise unter Vorspannung auf eine auf dem Fahrzeug montierte Kabelwinde 11 gewickelt. Bei einer solchen Konstruktion ist das Stromabnehmergestell ständig durch die Räder 9 auf der Führungsschiene 10 gelagert. Wenn das Gestell so bewegt wird, daß die mechanische Spannung im Stromkabel zu hoch wird, sind in der Regel Vorrichtungen vorhanden, um das Kabel abzukoppeln.

Wenn das Stromabnehmergestell 5 gemäß Figur 1 oder 2 durch auf die Führungsschiene und die Rollen fallendes Erz, Gestein oder dergleichen blockiert oder gebremst wird, so führt dies zu einer zusätzlichen Belastung der Kabelwinde und des Kabels, welches in extremen Fällen abreißen oder auskoppeln kann, wodurch das Fahrzeug fahruntüchtig wird.

Andere ähnliche bekannte Konstruktionen arbeiten im wesentlichen nach dem gleichen vorgenannten Prinzip.

Die hinsichtlich des Ankoppelns und Abkoppelns im Prinzip feste Verbindung zwischen Stromabnehmergestell und Aufhängevorrichtung des Stromschienensystems bedeutet eine unerwünschte Begrenzung der Bewegungsfreiheit eines Trolleyfahrzeugs. Bei Betriebsstörungen und Fehlern verschiedener Art ergeben sich Probleme, wenn ein Fahrzeug schnell von dem Stromschienensystem abgekoppelt und aus dem Grubengang zu einem zentralen Sammelplatz oder zu einer Reparaturwerkstatt gefahren werden soll.

Wegen des engen Querschnittes des Grubengangs, der normaler weise ca. 25 m$^2$ (5 x 5 m) betragen kann, ist eine Stromabnahme durch ein Bügelsystem, wie es beispielsweise bei normalen Zügen und anderen schienengebundenen Fahrzeugen verwendet wird, nicht anwendbar. Da die verwendeten Trolleyfahrzeuge isolierte Gummiräder haben, kann die Erde nicht als Stromleiter verwendet werden. Die Mindestanzahl der erforderlichen Stromleiter, nämlich bei Gleichstromspeisung, beträgt zwei, wodurch die Möglichkeit, normale Stromabnehmerbügelsysteme von Zügen zu verwenden, noch weiter erschwert wird.

Der Erfindung liegt die Aufgabe zugrunde, ein Verfahren der eingangs genannten Art und eine Vorrichtung zur Durchführung des Verfahrens zu entwickeln, mit welchen es möglich ist, das Stromabnehmergestell an jeder beliebigen Stelle an das Stromschienensystem anzuschließen.

Zur Lösung dieser Aufgabe wird ein Verfahren gemäß dem Oberbegriff des Anspruches 1 vorgeschlagen, erfindungsgemäß die im kennzeichnenden Teil des Anspruches 1 genannten Merkmale hat.

Vorteilhafte Ausgestaltungen der Erfindung sind in den Unteransprüchen 2 und 3 genannt.

Eine Vorrichtung zur Durchführung des Verfahren nach der Erfindung ist durch die im Anspruch 4 genannten Merkmale gekennzeichnet.

Die Erfindung ermöglicht ein automatisches Anschließen und Abnehmen des Stromabnehmergestells eines Trolleyfahrzeug an jeder beliebigen Stelle des Stromschienensystems. Die einzige Voraussetzung besteht darin, daß sich das Fahrzeug in seitlicher Richtung relativ zu dem an der Decke angeordneten Stromschienensystem inerhalb eines bestimmten maximalen Abstands befindet. Um diese Stellung einnehmen zu können, kann das Fahrzeug mit einer eigenen Energiequelle ausgerüstet sein. Durch die Erfindung wird eine neue Konstruktion geschaffen, bei der das Stromabnehmergestell und die Stromabnehmer von unten gegen den Schienenstrang gedrückt werden. Dies kann beispielsweise mit Hilfe eines hydraulisch betätigbaren Trägers geschehen, der ein Heben und Senken sowie ein Drehen des Stromabnehmergestells ermöglicht.

Wenn das Fahrzeug mit einer eigenen Energiequelle, zum Beispiel einer aufladbaren Batterie, versehen wird, kann es leicht in eine Position gefahren werden, in der es in seitlicher Richtung einen bestimmten maximalen Abstand von dem Schienenstrang hat. Nach Anfahren dieser Position kann durch einen Befehl der Anschluß an das Stromschienensystem mit der Vorrichtung nach der Erfindung durch eine Betätigungsfolge gemäß dem Verfahren nach der Erfindung automatisch erfolgen.

Da der Boden eines Grubenganges sehr uneben sein kann und Steine oder andere Hindernisse im Weg des Fahrzeugs liegen können, sind das Fahrzeug, der Träger, das Gestell und/oder die Stromabnehmer zweckmäßigerweise federnd ausgeführt, damit das Gestell und die Stromabnehmer mit den Führungsschienen und den Stromschienen in Kontakt gehalten werden können.

Das Verfahren und die Vorrichtung nach der Erfindung zeichnen sich durch eine Reihe von Vorteilen aus:

Der Träger stellt eine bedeutend sicherere und zuverlässigere Verbindung zwischen Fahrzeug und Stromabnehmergestell dar als ein verstärktes Stromkabel. Das Stromabnehmerkabel wird bei der Erfindung keiner mechanischen Zugbelastung ausgesetzt, wenn das Stromabnehmergestell von dem Träger hochgehalten wird.

Das Anschließen und Abnehmen des Stromabnehmergestells und der Stromabnehmer ist wesentlich einfacher als bei den vorgenannten bekannten Konstruktionen gemäß Figur 1 und 2.

Anschluß und Abnahme des Stromabnehmergestells und der Stromabnehmer können an beliebiger Stelle im Grubengang erfolgen.

Anschluß und Abnahme des Stromabnehmergestells und der Stromabnehmer sind auch möglich, wenn sich das Fahrzeug vorwärts bewegt.

Die für den Anschluß beziehungsweise für die Abnahme des Stromabnehmergestells und der Stromabnehmer erforderliche Zeit ist bei Anwendung des Verfahrens und der Vorrichtung nach der Erfindung bedeutend kürzer als bei den bekannten Konstruktionen und Systemen.

Es zeigen :

Figur 1 ein Trolleyfahrzeug mit einem in bekannter Weise über ein Kabel angeschlossenes Stromabnehmergestell, welches an einen Schienenstrang an der Decke eines Grubenganges angeschlossen ist,

Figur 2 eine bekannte Ausführungsform eines Stromabnehmergestells mit Stromabnehmern.

Figur 3 den prinzipiellen Aufbau eines Stromabnehmergestells nach der Erfindung mit Suchbügeln zur Positionierung, wobei die Stromabnehmer und die Führungsrollen nicht dargestellt sind,

Figur 4 den Ablauf eines Positionierungsvorgangs für das Stromabnehmergestell, also zuerst das Anheben in die richtige Höhenlage und dann die Seitendrehung bis das Stromabnehmergestell an und parallel mit dem Stromschienensystem liegt,

Figur 5 den Bewegungsablauf für das Stromabnehmergestell bei der Seitenbewegung,

Figur 6 ein Stromabnehmergestell in angekoppelter Stellung an einen an der Decke des Grubenganges befestigten Schienenstrang, wobei die Suchbügel fortgelassen sind,

Figur 7 das Stromabnehmergestell gemäß Figur 6 von oben gesehen.

Der Anschluß von Stromabnehmern an ein Stromschienensystem erfordert ein exaktes Positionieren. Zu diesem Zweck ist an dem im wesentlichen als Rahmen ausgeführten Stromabnehmergestell 5 ein Vertikalsuchbügel 13 schwenkbar angeordnet, und zwar gemäß dem Ausführungsbeispiel in Figur 3 an zwei schematich dargestellten senkrechten Stäben 25 und 26, an deren oberen Enden Drehgelenke L1 und L2 vorhanden sind. An dem Bügel 13 befindet sich ein Höhenlagenindikator 15, mit welchem die Schwenklage des Bügels 13 erfaßt werden kann. Außer der eben genannten Drehbewegung des Suchbügel 13 kann der gesamte Suchbügel 13 einschließlich der senkrechten Stäbe 25 und 26 nach unten bewegt werden, was in verschiedener Weise realisiert werden kann. Beispielsweise kann eine Drehbarkeit um die mit L3 und L4 angedeuteten Gelenke vorgesehen sein. Eine andere Möglichkeit besteht darin, daß die Stäbe 25 und 26 an den Stellen L3 und L4 so gelagert sind, daß sie in vertikaler Richtung abgesenkt werden können.

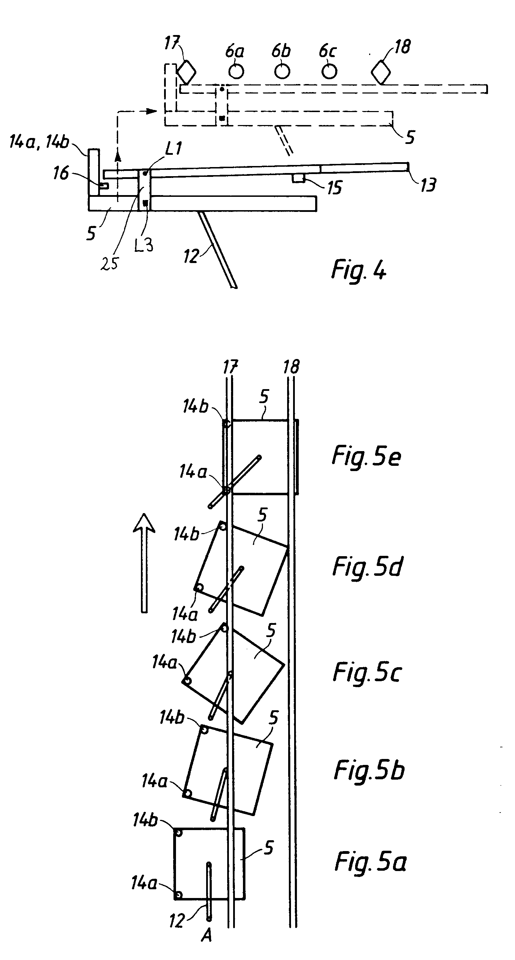

Ferner sind zwei Horizontalsuchbügel 14a und 14b an einer Seite des Gestells 5 vorhanden, die mit Seitenlagenindikator 16a, 16b ausgerüstet sind. Der Suchbügel 13 dient während des Suchens auch als Schutz für die übrigen auf dem Stromabnehmergestell angeordneten Bauteile. In der Arbeitsstellung ist der Suchbügel 13 heruntergeklappt oder abgesenkt, so daß zu den vorgenannten Bauteile von oben freier Zugang besteht. Die Positionierung geschieht in der Weise, daß das Gestell 5 mit Hilfe des Trägers 12 hochgehoben wird, so daß der Suchbügel 13 gegen eine der Führungsschiene 17 oder 18 anschlägt (Figur 4). Der Träger 12 ist an seinem unteren Ende beweglich in dem festen Punkt A (Figur 5) am Fahrzeug gelagert. Das Anheben des Gestells wird dann fortgesetzt, bis die richtige Höhenlage erreicht ist, was durch den Höhenlagenindikator 15 abgetastet wird. Danach wird das Gestell mit Hilfe des Trägers in seitlicher Richtung geführt, so daß zunächst einer der Horizontalsuchbügel 14a oder 14b eine der Führungsschienen trifft. Anschließend wird die Seitenbewegung und Drehung des Gestells fortgesetzt, bis auch der andere der horizontalen Suchbügel mit der Führungsschiene in Kontakt kommt. Das Gestell ist dann richtig positioniert, was durch die Seitenlagenindikatoren 16a und 16b, d.h. durch je einen Indikator für jeden Suchbügel 14a und 14b, angezeigt wird.

Zu dem Gestell gehören außer dem in Figur 3 gezeigten Rahmen auch Stromabnehmern und Führungsrollen, die über Führungsschienen 17, 18 (Figur 4) das Gestell in seiner Lage halten, wenn sich das Fahrzeug im Grubengang bewegt. Dies wird im weiter unten noch näher ausgeführt.

Anhand der Figuren 4 und 5 soll der Positionierungsvorgang des Stromabnehmergestells und der Stromabnehmern gemäß dem Verfahren nach der Erfindung nunmehr im einzelnen beschrieben werden. Figur 4 zeigt das Stromabnehmergestell von vorn in Bewegungsrichtung des Trolleyfahrzeugs. Figur 4 zeigt zwei Führungsschienen 17 und 18 und zwischen diesen drei Stromschienen 6a bis 6c in Form von Kupferrohren. Diese sind mittels isolierenden Verstrebungen, die nicht in der Figur dargestellt sind, an den Führungsschienen befestigt, die ihrerseits an der Decke des Grubenganges befestigt sind. Zu Beginn des Positionierungsvorgangs wird das Fahrzeug mittels einer eigener Energiequelle in Vorwärtsrichtung in eine Lage gefahren, in der das Stromabnehmergestell 5 innerhalb eines bestimmten vorgegebenen Abstandsbereiches seitlich des Schienenstrangs liegt. Wird der Befehl zum Anschluß gegeben, so wird das Gestellt mit Hilfe des Trägers 12 angehoben, wobei der Suchbügel 13 mit einer der Führungsschienen in Kontakt kommt. Bei der in Figur 4 gezeigten Ausgangsposition des Fahrzeugs bzw. des Stromabnehmergestells trifft der Suchbügel 13 zuerst die Führungsschiene 18. Bei der weiteren Aufwärtsbewegung des Gestells wird der Bügel 13 um die Drehlager L1 und L2 gedreht bis der Bügel seine untere Grenzlage erreicht hat, woraufhin die Aufwärtsbewegung mechanisch von den Führungsschienen 17 und 18 gestoppt wird. Das Erreichen der genannten unteren Grenzlage wird von dem Höhenlagenindikator 15 angezeigt. Die heruntergedrückte Endlage des Suchbügel 13 ist vorzugsweise die waagerechte Lage, wie sie im oberen Teil in Figur 4 dargestellt ist. In der Ausgangslage ist der Suchbügel 13 also von der Lagerstelle L1, L2 aus gesehen, schräg nach oben gerichtet. Der Suchbügel 13 gleitet nun an den beiden Führungsschienen 17 und 18. Wenn das Anschlußverfahren aus einer Ausgangslage beginnt, in der sich das Fahrzeug und das Stromabnehmergestell seitlich weiter vom Schienenstrang entfernt befindet, dann kann der Suchbügel 13 bei der Aufwärtsbewegung je nach Fahrtrichtung entweder nur die Führungsschiene 17 oder die Führungsschiene 18 treffen. Der Ablauf der Aufwärtsbewegung ist im übrigen jedoch der gleiche, wie in dem Falle, in welchem der Suchbügel 13 mit beiden Führungsschienen in Kontakt kommt. Wenn die Aufwärtsbewegung mechanisch gestoppt worden ist, drückt das Stromabnehmergestell mit einem bestimmten eingestellten Druck gegen eine oder beide Führungsschienen, so daß das Stromabnehmergestell an der Unterseite der Führungsschiene entlang bewegt werden kann. Das Stromabnehmergestell steht in dieser Phase mit dem Suchbügel in Kontakt mit der Unterseite einer oder beider Führungsschienen und kann seitlich verschoben werden und unter den Schienenstrang gelangen, ohne daß die Stromabnehmer usw. mit dem Schienenstrang in Berührung kommen. Die Kraft, mit welcher das Stromabnehmergestell nach oben gedrückt wird, kann kleiner sein als die Kraft, mit der das Gestell nach oben gedrückt wird, wenn die Stromabnehmer mit den Stromschienen in Kontakt gekommen sind, das Stromabnehmergestell sich also in Arbeitsstellung befindet. Das Stromabnehmergestell kann also in horizontaler Richtung verschoben werden, bis sich jeder Stromabnehmer direkt unter der ihn zugeordneten Stromschiene und die Führungsrollen sich direkt unter der ihnen zugeordneten Führungsschiene befinden. Der Bewegungsablauf für die Seitenbewegung des Stromabnehmergestells geht aus Figur 5 hervor, in welcher die Figuren 5a bis 5e verschiedene Stadien der Seiten- und Drehbewegung zeigen. Figur 5a zeigt das Stromabnehmergestell in der angenommenen Ausgangsposition. Der Träger 12 hat sein festes Drehzentrum A am Fahrzeug, welches während des Positionierungsvorgangs stillsteht oder sich langsam vorwärts bewegt.

Wenn der Aufwärtsbewegungsabschnitt des Anschlußverfahrens beendet ist, wird das Verfahren mit der Seitenverschiebung des Stromabnehmergestells durch Drehung des Trägers automatisch fortgesetzt, wobei die Drehung im Sinne der Figur 5 im Uhrzeigersinn erfolgt. In Figur 5c ist der Träger so weit gedreht worden, daß der vertikale Suchbügel 14b des Gestells in Kontakt mit der Führungsschiene 17 gekommen ist. Bei der weiteren Bewegung des Trägers und des Gestells wird das letztere so gedreht, daß auch der vertikale Suchbügel 14a mit der Führungsschiene in Kontakt kommt. Der Endzustand dieser Bewegungsphase ist in Figur 5e gezeigt. Die Seitenlagenindikatoren 16a und 16b gemäß Figur 3 zeigen an, daß die beiden Suchbügel 14a und 14b mit der Führungsschiene in Kontakt gekommen sind.

Das Stromabnehmergestell ist nunmehr in seitlicher Richtung richtig positioniert und parallel zum Schienenstrang ausgerichtet.

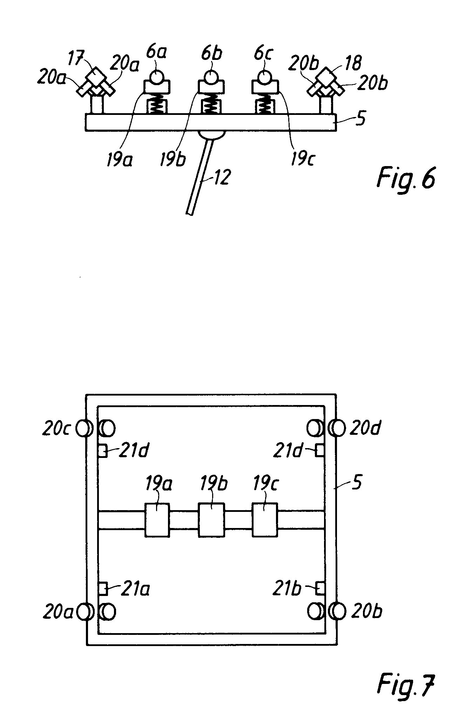

In den Figur 3 bis 5 ist das Stromabnehmergestell als einfacher Rahmen mit Suchbügeln 13, 14a und 14b dargestellt. Wie die Figuren 6 und 7 zeigen, ist das Gestell außerdem mit Stromabnehmern 19a bis 19c und mit vier Paaren von Führungsrollen 20a bis 20b versehen. In den Figuren 6 und 7 sind die Suchbügel der besseren Übersicht halber fortgelassen.

Wenn das Stromabnehmergestell in seitlicher Richtung richig positioniert ist, wird der Suchbügel 13 abgesenkt, was beispielsweise durch Drehung um Drehgelenke in den Punkten L3 und L4 oder durch vertikale Verschiebung der Stäbe 25 und 26 erfolgen kann. Dabei wird zugleich das Gestell angehoben, so daß die Führungsrollen 20 mit den Führungsschienen 17 und 18 in Eingriff gelangen und die Stromabnehmer 19 mit den ihnen zugeordneten Stromschienen 6 in Kontakt kommen. Wenn die Führungsrollenindikatoren 21a bis 21d ein Signal geben, daß die Führungsrollen in richtiger Weise rollen, dann wird die nach oben gerichtete Kraft mit Hilfe des Trägers erhöht, bis die erforderliche Andruckkraft erreicht ist. Der mechanische Teil des Anschlußverfahrens ist damit abgeschlossen. Bevor die elektrische Spannung an das Antriebssystem des Fahrzeugs durchgeschaltet wird, wird beispielsweise überprüft, ob die Phasenfolge zutreffend ist und die Spannung innerhalb der vorgeschriebenen Grenzen liegt. Danach werden die Schalter usw. eingeschaltet, so daß das Fahrzeug durch Speisung aus dem Schienenstrang gefahren werden kann.

Beim normalen und beabsichtigten Abnehmen des Stromabnehmergestells von der Stromschiene wird das Stromabnehmergestell durch den Träger nach unten gezogen und der vertikale Suchbügel gleichzeitig angehoben, so daß dieser an der Führungsschiene gleitet. Dabei wird das Gestell mit weiterer Kraft nach unten gedrückt, wobei der Kontakt zwischen Stromabnehmern und Stromschienen aufgehoben wird. Träger und Gestell werden dann noch weiter nach unten geführt, bis eine abgesenkte Ruheposition erreicht worden ist.

Das hydraulische System des Trägers ist so beschaffen, das es bei normalen Unebenheiten im Boden des Grubenganges das Stromabnehmergestell und die Stromabnehmer in gutem Kontakt mit dem Schienenstrang an der Decke hält.

Bei unnormal großen Unebenheiten im Boden und bei einer versehentlichen zu weiten seitlichen Entfernung des Fahrzeug vom Schienenstrang kann es passieren, daß das Gestell vom Schienenstrang abspringt, wobei auch die Kopplung zwischen den Stromschienen und den Stromabnehmern unterbrochen wird. Hierbei können Lichtbögen und schwere Brandschäden an dem Schienenstrang und den Stromabnehmern auftreten. Um dies zu verhindern, ist jedes Führungsrollenpaar mit Führungsrollenindikatoren 21 ausgerüstet, die ein Signal geben, wenn eines der Rollenpaare eine Tendenz zur Aufhebung des Kontaktes mit der Führungsschiene zeigt. Wenn einer der Führungsrollenindikatoren 21a bis 21d anzeigt, daß das Stromabnehmergestell mit Führungsrollen und Stromabnehmern im Begriff ist, den Kontakt mit dem Schienenstrang aufzuheben, so wird mit Hilfe der oben erwähnten Schalter die Stromzufuhr zum Fahrzeug unterbrochen, so daß keine Lichtbögen und Brandschäden an dem Schienenstrang bzw. an den Stromabnehmern auftreten können. Wenn angezeigt wird, daß die Rollen abheben, dann wird auch der Suchbügel 13 hochgeklappt bzw hochgeschoben, wobei das Gestell mit den Führungsrollen und den Stromabnehmern nach unten gedrückt wird. Gleichzeitig wird ein Befehl zum Herunterfahren des Gestells mit Hilfe des Trägers gegeben, d.h. daß ein normal verlaufender Abnahmevorgang stattfindet.

Nachdem das Fahrzeugs mittels seiner eigenen Energiequelle in einer Lage innerhalb der Grenzen gefahren worden ist, in denen ein Anschluß möglich ist, kann das Anschlußverfahren erneut durchgeführt werden.

Die Vorrichtung zur Durchführung des Verfahrens kann gegenüber den konkret beschriebenen Ausführungsbeispielen in vielfacher Weise variiert werden. Beispielsweise kann der Suchbügel 13 so beschaffen sein, daß nur die Teile des Suchbügels senkrecht verstellbar ausgeführt sind, die quer zum Schienenstrang liegen, also die Teile, die abgesenkt werden müssen, damit die Führungsrolle und die Stromabnehmer an die Führungsschienen und Stromschienen gehoben werden können. Die außerhalb des Gestells liegenden spitzen Teile des Suchbügels können also fest angeordnet sein.

Die Bewegungen des Trägers, des Gestells und des Suchbügels, die bei normaler Steuerung oder im Zusammenhang mit der Anzeige der einzelnen Lageindikatoren stattfinden, können durch bekannte mechanische, hydraulische oder pneumatische Vorrichtungen herbeigeführt werden. Bewegungsfolgen, welche die verschiedenen Schritte beim Anschluß, bei einer beabsichtigten Abnahme oder bei einer Abnahme, die stattfindet, weil das Gestell im Begriff ist, sich vom Schienenstrang wegen einer Unebenheit des Bodens oder eines falschen Manövers zu trennen, können in bekannter Weise programmiert werden. Die Programmierung kann in herkömmlicher Weise durch Relaisfolgen oder in Form eines computergesteuerten Programms erfolgen. Eine solche Programmierung umfaßt auch die rein elektrischen Funktionen, wie zum Beispiel Phasenkontrolle, Ein- und Ausschaltung, Verringerung der Spannung usw.

**Patentansprüche**

1. Verfahren zum Anschließen und Abnehmen des Stromabnehmergestells (5) eines Trolleyfahrzeugs (1,2) an einen bzw. von einem oberhalb des Fahrzeugs befindlichen Schienenstrang (6) (Stromschienensystem), welcher aus Stromschienen (6a,6b,6c) und Führungsschienen (17,18) besteht, wobei das Stromabnehmergestell (5) von einem Träger (12) getragen wird,

   **dadurch gekennzeichnet,**
   - daß das Trolleyfahrzeug, beispielsweise mit Hilfe einer eigenen Energiequelle, in eine Ausgangsposition etwas seitlich des Schienenstrangs (6) gefahren wird,
   - daß dann, während das Fahrzeug steht oder langsam vorwärts fährt, das Stromabnehmergestell (5), von dem ihn tragender Träger (12), um dessen oberes Ende das Stromabnehmergestell in einer im wesentlichen horizontalen Ebene in beiden Richtungen gedreht werden kann, im wesentlichen senkrecht nach oben gehoben wird bis ein um eine horizontale Achse (L1, L2) drehbar am Stromabnehmergestell (5) angebrachter und vorzugsweise schräg nach oben weisender Vertikalsuchbügel (13) mit mindestens einer der Führungsschienen (17, 18) in Kontakt kommt,
   - daß bei der weiteren Aufwärtsbewegung des Stromabnehmergestells der Vertikalsuchbügel (13) durch die Führungsschienen relativ zum Stromabnehmergestell nach unten in Richtung zum Stromabnehmergestell geschwenkt wird bis die untere vorzugsweise waagerechte Endstellung des Vertikalbügels durch einen Höhenlagenindikator (15) angezeigt wird,
   - daß anschließend das Stromabnehmergestell mit Hilfe des Trägers (12) in der genannten im wesentlichen horizontalen Ebene solange in der einen oder anderen Richtung gedreht wird bis zwei an einer Seite des Stromabnehmergestells angebrachte Horizontalsuchbügel (14a, 14b), die nach oben über die horizontale Drehachse (L1, L2) des Vertikalsuchbügels (13) hinausragen, mit der am nächsten gelegenen Führungsschiene (17) in Kontakt kommen, was durch am Stromabnehmergestell angeordnete Seitenlagenindikatoren (16a, 16b) angezeigt wird,
   - daß anschließend der Vertikalsuchbügel (13) abgesenkt wird und
   - daß das Stromabnehmergestell mit den Stromabnehmern (19a bis 19c) und den Führungsschienen (20a, 20b) in Richtung zum Schienenstrang gehoben wird bis an dem Stromabnehmergestell angebrachte Führungsrollenindikatoren (21a bis 21d) anzeigen, daß die Stromabnehmer mit den Stromschienen (6a bis 6c) und die Führungsrollen (20a,20b) mit den Führungsschienen in Kontakt gelangt sind.

2. Verfahren nach Anspruch 1, **dadurch gekennzeichnet**, daß bei einem normalen betriebsmäßigen Abnehmen des Stromabnehmergestells (5) von dem Schienenstrang (6) das Stromabnehmergestell mittels des Trägers (12) nach unten gefahren wird und gleichzeitig der Vertikalsuchbügel (13) angehoben wird und mit den Führungsschienen (17,18) in Kontakt kommt, daß anschließend das Stromabnehmergestell weiter nach unten bewegt wird, wobei der Kontakt zwischen den Stromabnehmern (19a bis 19c) und den Stromschienen (6a bis 6c) aufgehoben wird, und daß anschließend der Träger mit dem Stromabnehmergestell weiter nach unten bis zum Erreichen einer versenkten Ruheposition gefahren wird.

3. Verfahren nach einem der Ansprüche 1 oder 2, **dadurch gekennzeichnet**, daß, wenn mindestens einer der am Stromabnehmergestell (5) vorhandenen Führungsrollenindikatoren (21a bis 21d) anzeigt, daß das Stromabnehmergestell dazu neigt, sich aus dem Kontakt mit dem Schienenstrang (6) zu lösen, ein Verfahren zum Abnehmen des Stromabnehmergestells gemäß Anspruch 2 eingeleitet wird.

4. Vorrichtung zur Durchführung des Verfahren nach einem der vorhergehenden Ansprüche,

   **dadurch gekennzeichnet,**
   - daß das Stromabnehmergestell (5) rahmenförmig ausgebildet ist und von einem am Fahrzeug befestigten Träger (12) getragen wird, mit dessen Hilfe das Stromabnehmergestell gehoben werden kann und um dessen Ende das Stromabnehmergestell in einer im wesentlichen horizontalen Ebene in beiden Richtungen gedreht werden kann,

- daß am Stromabnehmergestell (5) ein vorzugsweise schräg nach oben weisender Vertikalsuchbügel (13) vorhanden ist, der um eine horizontale Achse (L1, L2) drehbar am Stromabnehmergestell befestigt ist und durch eine vom Schienenstrang (6) von oben auf ihn ausgeübte Kraft um die horizontale Achse (L1, L2) in eine vorzugsweise waagerechte Endstellung herunterschwenkbar ist,

- daß ein Höhenlagenindikator (15) zur Anzeige des Erreichens der genannten Endstellung des Vertikalsuchbügels vorhanden ist,

- daß der Vertikalsuchbügel zusätzlich zu der genannten Drehbewegung in vertikaler Richtung absenkbar ist,

- daß an einer im Betrieb parallel zum Schienenstrang liegenden Seite des Stromabnehmergestells (5) nach oben ragende über die horizontale Drehachse (L1, L2) des Vertikalsuchbügels (13) hinausragende Horizontalsuchbügel (14a, 14b) vorhanden sind, von denen jeder mit einem Seitenlagenindikator (16a, 16b) versehen ist,

- daß am Stromabnehmergestell paarweise Führungsrollen (20a bis 20d) vorhanden sind, deren Laufflächen bei angeschlossenem Stromabnehmergestell an den Führungsschienen des Schienenstrangs anliegen, wobei jedes Paar von Führungsrollen mit einem Führungsrollenindikator (21a bis 21d) zur Anzeige des Kontaktes zwischen Führungsrollen und Führungsschienen versehen ist, und

- daß die Stromabnehmer (19a bis 19c) derart am Stromabnehmergestell angeordnet sind, daß sie bei angeschlossenem Stromabnehmergestell an den Stromschienen des Schienenstrangs anliegen.

## Claims

1. Method for connecting and disconnecting of the current collector pick-up unit (5) of a trolley vehicle (1,2) to or from, respectively, a rail system (6) (conductor rail system) arranged above the vehicle, which rail system consists of conductor rails (6a,6b,6c) and guide rails (17,18), with the current collector pick-up unit (5) being supported by an arm (12),

**characterized** in
- that the trolley vehicle, substantially with the help of an energy source of its own, is moved into a starting position somewhat lateral of the rail system (6),

- that then, while the vehicle rests or moves slowly forwards, the current collector pick-up unit (5) is raised substantially vertically upwards by the arm (12), which supports the current collector pick-up unit and about the upper end of which the current collector pick-up unit is able to be rotated in both directions in a substantially horizontal plane, until a vertical scanning frame (13), which is, rotatably about a horizontal axis (L1, L2), attached to the current collector pick-up unit (5) and extends preferably obliquely upwards, makes contact with at least one of the guide rails (17,18),

- that during the further upward movement of the current collector pick-up unit the vertical scanning frame (13) is swung downwards relative to the current collector pick-up unit by means of the guide rails until the arrival in the lowermost, preferably horizontal, end position of the vertical scanning frame is indicated by a vertical position indicator (15),

- that thereafter the current collector pick-up unit, by means of the arm (12), is rotated in one or the other directions in said substantially horizontal plane until two horizontal scanning frames (14a,14b), which are arranged on one side of the current collector pick-up unit and extend upwards beyond the horizontal axis of rotation (L1, L2) of the vertical scanning frame (13), make contact with the nearest guide rail (17), what is indicated by lateral position indicators (16a,16b) attached to the current collector pick-up unit,

- that thereafter the vertical scanning frame (13) is lowered, and

- that the current collector pick-up unit with the current collectors (19a to 19c) and the guide wheels (20a), (20b) are raised in the direction towards the rail system until guiding wheel indicators (21a to 21b) attached to the current collector pick-up unit indicate that the current collectors have come into contact with the conductor rails (6a to 6c) and the guiding wheels (20a, 20b) have come into contact with the guide rails.

2. Method according to claim 1, **characterized** in that during normal operational disconnection of the current collector pick-up unit (5) from the rail system (6) the current collector pick-up unit (5) is lowered by means of the arm (12) while at the same time the vertical scanning frame (13) is raised and brought into contact with the guide rails (17,18), that thereafter the current collector pick-up unit is further lowered, whereby the contact between the current collectors (19a to 19c) and the conductor rails (6a to 6c) is interrupted, and that thereafter the arm with the current collector pick-up unit is further lowered until a lower resting position has been reached.

3. Method according to any of claims 1 or 2, **characterized** in that, in case that at least one of the guiding wheel indicators (21a to 21b) which are attached to the current collector pick-up unit (5) indicates that the current collector pick-up unit tends to release its contact with the rail system (6), a procedure for disconnecting the current collector pick-up unit according to claim (2) is initiated.

4. Device for carrying out the method according to any of the preceding claims,

   **characterized** in that,
   - the current collector pick-up unit (5) is formed as a frame and supported by an arm (12) attached to the vehicle, by means of which the current collector pick-up unit can be raised and about the end of which the current collector pick-up unit can be rotated in a substantially horizontal plane in either direction,
   - that the current collector pick-up unit (5) is provided with a vertical scanning frame (13), which preferably extends obliquely upwards, said vertical scanning frame 13 being attached rotatably about an horizontal axis (L1, L2) to the current collector pick-up unit and being swingable downwards into a preferably horizontal end position by a force exerted on it from above by said rail system (6),
   - that a vertical position indicator (15) is provided to indicate the arrival of the vertical scanning frame in said end position,
   - that said vertical scanning frame in addition to said rotational movement can be lowered in the vertical direction,
   - that there are horizontal scanning frames (14a,14b) on one side of the current collector pick-up unit (5) which side extends under operation parallel to the rail system, which scanning frames (14a,14b) extend upwards beyond said horizontal rotational axis (L1, L2) of the vertical scanning frame (13) and each of which is provided with a lateral position indicator (16a,16b),
   - that the current collector pick-up unit is equipped with pairs of guiding wheels (20a,20b) the running treads of which abut against the guide rails of the rail system when the current collector pick-up unit is in the connected position, whereby each pair of guide rails is provided with a guide rail indicator (21a to 21b) to indicate the contact between the guiding wheels and the guide rails, and
   - that the current collectors (19a to 19c) are attached to the current collector pick-up unit in such a way that they make contact with the conductor rails of the rail system in the connected position of the current collector pick-up unit.

**Revendications**

1. Procédé pour raccorder et écarter la structure (5) à trolleys d'un véhicule à trolleys (1,2) à une ou d'une file de rails (6), située au-dessus du véhicule (système de rails conducteurs), qui est constituée de rails conducteurs (6a,6b,6c) et de rails de guidage (17,18), la structure (5) à trolleys étant portée par un support (12),
   caractérisé par le fait
   - que le véhicule à trolleys, est amené, par exemple à l'aide d'une source d'énergie propre, dans une position de départ légèrement décalée latéralement par rapport à la file de rails (6),
   - qu'ensuite, alors que le véhicule est à l'arrêt ou avance lentement, la structure (5) à trolleys est soulevée sensiblement verticalement par le support (12), qui porte la structure et autour de l'extrémité supérieure duquel la structure à trolleys peut pivoter dans les deux sens dans un plan sensiblement horizontal, jusqu'à ce qu'un étrier chercheur de détection verticale (13) monté de manière à pouvoir tourner autour d'un axe horizontal (1,2) sur la structure (5) du trolley et orienté de préférence obliquement vers le haut vienne en contact avec au moins l'un des rails de guidage (17,18),
   - que, lors de la poursuite du déplacement ascendant de la structure à trolleys, les rails de guidage font pivoter l'étrier chercheur de détection verticale (13) vers le bas par rapport à la structure à trolleys jusqu'à ce que la position finale inférieure de préférence horizontale de l'étrier vertical soit affichée par un indicateur de position en hauteur (15),

- qu'ensuite la structure à trolleys pivote, sous l'action du support (12), dans ledit plan sensiblement horizontal, dans l'un ou l'autre sens jusqu'à ce que deux étriers chercheurs de détection horizontale (14a,14b), qui sont installés sur un côté de la structure à trolleys et font saillie vers le haut au-delà de l'axe horizontal de rotation (L1,L2) de l'étrier chercheur de détection verticale (13), viennent en contact avec le rail de guidage (17) le plus proche, ce qui est indiqué par des indicateurs de position latérale (16a,16b) installés sur la structure à trolleys,

- qu'ensuite l'étrier chercheur de détection verticale (13) est abaissé, et

- que la structure à trolleys équipée des trolleys (19a à 19c) et des raiis de guidage (20a, 20b) est soulevée en direction de la file de rails jusqu'à ce que des indicateurs (21a à 21d) des galets de guidage, qui sont installés sur la structure à trolleys, indiquent que les trolleys sont venus en contact avec les rails conducteurs (6a à 6c) et que les galets de guidage (20a, 20b) sont venus en contact avec les rails de guidage.

2. Procédé suivant la revendication 1, caractérisé par le fait que, dans le cas d'un écartement normal en fonctionnement de la structure à trolleys (5) par rapport à la file de rails (6), la structure à trolleys est abaissée au moyen du support (12) et simultanément l'étrier chercheur de détection verticale (13) est soulevé et vient en contact avec les rails de guidage (17,18), qu'ensuite la structure à trolleys continue à être abaissée, auquel cas le contact entre les trolleys (19a à 19c) et les rails conducteurs (6a à 6c) est supprimé et qu'ensuite le support équipé de la structure à trolleys continue à être abaissée jusqu'à atteindre une position abaissée de repos.

3. Procédé suivant l'une des revendications 1 ou 2, caractérisé par le fait que lorsqu'au moins l'un des indicateurs (21a à 21d) des galets de guidage, qui sont présents sur la structure à trolleys (5), indique que le contact entre la structure à trolleys et la file de rails (6) tend à disparaître, un procédé d'écartement de la structure à trolleys conforme à la figure 2 est déclenché.

4. Dispositif pour la mise en oeuvre du procédé suivant l'une des revendications précédentes, caractérisé par le fait :

- que la structure à trolleys (5) est réalisée en forme de cadre et est supportée par un support (12) fixé sur le véhicule et à l'aide duquel la structure à trolleys peut être soulevée et autour de l'extrémité duquel la structure à trolleys peut pivoter dans les deux sens dans un plan sensiblement horizontal,

- que sur la structure à trolleys (5) il est prévu un étrier chercheur de détection verticale (13), qui de préférence est dirigé obliquement vers le haut et est fixé sur la structure à trolleys, de manière à pouvoir pivoter autour d'un axe horizontal (L1,L2) et peut être abaissé par pivotement dans une position finale de préférence horizontale, autour de l'axe horizontal (L1,L2), sous l'action d'une force qui est exercée sur l'étrier à partir du haut par la file de rails (6),

- qu'il est prévu un indicateur de position en hauteur (15) servant à indiquer le moment où ladite position finale de l'étrier chercheur de détection verticale est atteinte,

- que l'étrier chercheur de détection verticale peut être abaissé dans la direction verticale, en plus desdits mouvements de rotation, et

- que sur un côté, qui en fonctionnement est parallèle à la file de rails, de la structure à trolleys (5) il est prévu des étriers chercheurs de détection verticale (14a,14b), qui font saillie vers le haut au-delà de l'axe horizontal de rotation (L1,L2) de l'étrier chercheur de détection verticale (13) et dont chacun est pourvu d'un indicateur de position latérale (16a,16b),

- que sur la structure à trolleys il est prévu, par couples, des galets de guidage (20a, à 20d), dont les surfaces de roulement s'appliquent contre les rails de guidage de la file de rails, lorsque la structure à trolleys est raccordée, chaque couple de galets de guidage étant pourvu d'un indicateur (21a à 21d) servant à indiquer le contact entre des galets de guidage et des rails de guidage, et

- que les trolleys (19a à 19c) sont disposés sur la structure à trolleys de telle sorte que, lorsque cette dernière est raccordée, les trolleys s'appliquent contre les rails conducteurs de la file de rails.

*Fig. 1*

*Fig. 2*

*Fig. 3*

Fig. 4

Fig. 5e

Fig. 5d

Fig. 5c

Fig. 5b

Fig. 5a

Fig. 6

Fig. 7